# EUROPÄISCHE PATENTANMELDUNG

(11) **EP 2 675 029 A1**
(43) Veröffentlichungstag der Anmeldung: **18.12.2013**
(21) Anmeldenummer: 12171602.1
(22) Anmeldetag: 12.06.2012
(51) Int. Cl.: H02G 5/06, H01B 12/06

(54) **HTSL Stromschiene und HTSL Stromschienensystem**

(71) Anmelder: Vision Electric GmbH, 66851 Schwanenmühle (DE)
(72) Erfinder: Reiser, Dr. Wolfgang, 67697 Otterberg (DE)
(74) Vertreter: Gille Hrabal

(57) **Zusammenfassung**

Es ist eine Stromschiene mit einer um ihre Längsachse biegesteifen Tragschiene und einem Hochtemperatursupraleiter (HTSL) offenbart, wobei sich der HTSL im Wesentlichen über die Länge der Tragschiene erstreckt. Erfindungsgemäß wurde erkannt, dass eine für die oben genannten Gleichstrom-Hochstrom Anwendungen geeignete Stromschiene besonders einfach und mit in Zukunft preiswert verfügbaren Materialien bereitgestellt werden kann, wenn diese eine um ihre Längsachse biegesteife Tragschiene und einen HTSL aufweist, wobei sich der HTSL im Wesentlichen über die Länge der Tragschiene erstreckt. Vorzugsweise werden als flexibles Band ausgebildete HTSL eingesetzt. Ein flexibles Band ist einfach herzustellen, gut zu verarbeiten und bereitzustellen, da es z. B. als Rolle oder zusammengelegt geliefert werden kann.

## Beschreibung

Die Erfindung betrifft eine Stromschiene und Stromschienensystem. Insbesondere betrifft die Erfindung eine Stromschiene, die als Gleichstromverbindung für Hochstromverbraucher, insbesondere Aluminium-, Kupfer- oder Zink-Elektrolysen, Graphitisierungsanlagen, chemische Elektrolysen, wie z.B. Chlor- oder Fluorelektrolysen oder auch in Rechenzentren mit Versorgung der Server auf DC-Basis, eingesetzt werden kann.

Derartige Stromschienen müssen Gleichstrom in Größenordnungen von ca. 10 - mehreren 100 kA tragen. Gemäß Stand der Technik ist dazu ein massiver Einsatz an geeigneten leitfähigen Materialien, insbesondere Kupfer oder Aluminium nötig, welcher zudem durch aufwändige Mechanik und Tragwerke gehalten und verlegt werden müssen. Auf längeren Strecken ergeben sich hohe elektrische Verluste.

Supraleiter sind dafür bekannt, dass bei Gleichstromanwendungen keine elektrischen Verluste auftreten und hohe Stromdichten möglich sind, wobei die sehr niedrigen Sprungtemperaturen unterhalb von 23K den Einsatz von teuren Kühlflüssigkeiten erfordern. Diese Supraleiter werden heute als Tieftemperatursupraleiter (TTSL) bezeichnet. Seit Entdeckung der Supraleitung in Ba-La-Cu-O-Verbindungen sind zahlreiche Hochtemperatursupraleiter (HTSL) gefunden wurden, deren kritische Temperaturen zum Teil mehr als 100 Kelvin über denen der TTSL liegen. Die bisher höchsten Sprungtemperaturen unter Normaldruck wurden mit 133 Kelvin und 135 Kelvin an Hg-Ba-Ca-Cu-O-Verbindungen gemessen. Ein Teil der über fünfzig heute bekannten HTSL weisen Sprungtemperaturen auf, die über der Siedetemperatur des flüssigen Stickstoffs von 77 K liegen. Dies ermöglicht neue technische Anwendungen der Supraleitung, da die Kühlung mit flüssigem Stickstoff um Größenordnungen billiger als die mit flüssigem Helium ist, welchen die TTSL benötigen. Andere Flüssigkeiten kommen auch in Betracht, sofern ihr Siedepunkt unterhalb der Sprungtemperatur der verwendeten Supraleiter liegen.

HTSL werden derzeit insbesondere erforscht im Hinblick auf ihre Eignung als elektrische Energieübertragungskabel, Transformatoren, elektrische Magnete und Motoren. Dabei ist der Focus auf flexible, das heißt biegsame HTSL gerichtet. Es existieren flexible Bänder und gezogene Drähte. Jedoch ist die Herstellung eines außerhalb des Labors im rauen Alltag gebrauchfähigen flexiblen-HTSL Kabels aufwändig.

Es ist daher Aufgabe der vorliegenden Erfindung eine verbesserte Stromschiene zu schaffen, die besonders für die oben genannten Gleichstrom-Hochstrom Anwendungen geeignet ist.

Diese Aufgabe wird gelöst durch eine Stromschiene mit den Merkmalen des Hauptanspruchs. Vorteilhafte Ausgestaltungen sind Gegenstand der Unteransprüche.

Erfindungsgemäß wurde erkannt, dass eine für die oben genannten Gleichstrom-Hochstrom Anwendungen geeignete Stromschiene besonders einfach und mit in Zukunft preiswert verfügbaren Materialien bereitgestellt werden kann, wenn diese eine um ihre Längsachse biegesteife Tragschiene und einen Hochtemperatursupraleiter (HTSL) aufweist, wobei sich der HTSL im Wesentlichen über die Länge der Tragschiene erstreckt.

Da die Fachwelt darauf konzentriert ist, supraleitenden Ersatz für flexible Kabel oder Drähte zu schaffen, gehen alle Anstrengungen in diese Richtung. Wie nachfolgend weiter erläutert, bietet der Verbund aus einer "starren" Tragschiene mit einem HTSL, der zumeist bandartig vorliegt, Vorteile. Die starre Tragschiene kann aus leitfähigen Materialien, insbesondere CU, AI oder auch isolierenden Kunststoff sein, was später näher erläutert wird. Die Art der Verbindung zwischen Tragschiene und HTSL ist anwendungsorientiert wählbar, Insbesondere ist Klemmen, Klammern, Einklicken, Verkleben oder Verlöten möglich.

Vorzugsweise werden als flexibles Band ausgebildete HTSL eingesetzt. Ein flexibles Band ist einfach herzustellen, gut zu verarbeiten und bereitzustellen, da es z. B. als Rolle oder zusammengelegt geliefert werden kann.

Bevorzugt ist hierbei zur Zeit wegen der relativ guten Verfügbarkeit YBCO, als HTSL; jedoch kommen auch andere geeignete HTSL in Betracht. Dabei geht man von einem weniger als 100 µm dünnen Metallband mit kubischer Kristallstruktur aus, welche ähnliche Gitterparameter wie das YBCO hat. Durch thermomechanische Behandlung wird die gewünschte Textur im Band erzeugt. Auf die Textur werden zuerst keramische Schichten und auf diese eine YBCO-Schicht abgeschieden. Dabei sind Bedingungen zu schaffen, die dazu führen, dass die Textur des Metallbandes auf die nachfolgenden Schichten übertragen wird.

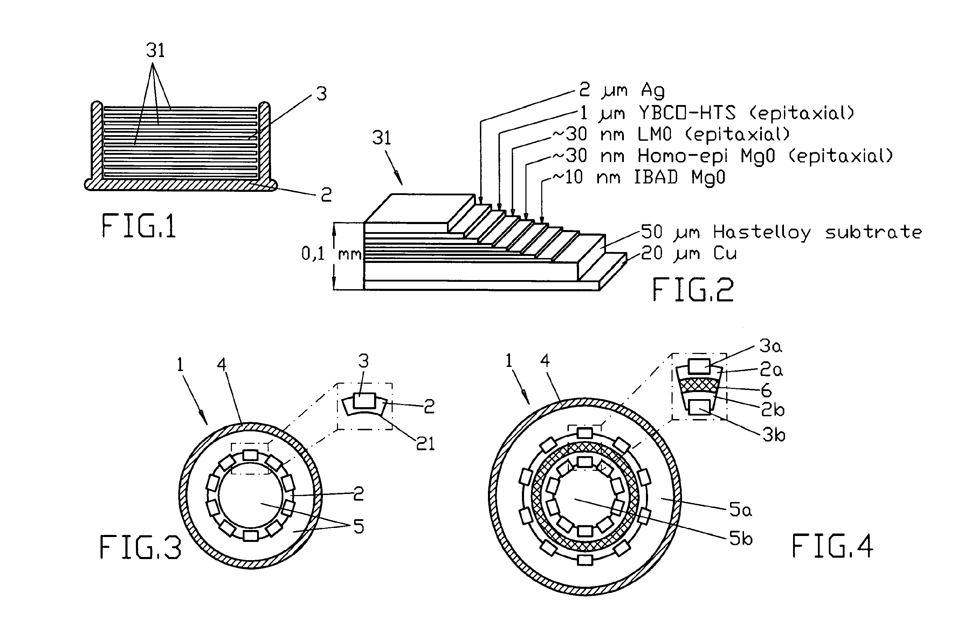

Ein typischer HTSL ist so aufgebaut, wie im Zusammenhang mit Fig. 2 näher beschrieben. Es ist daher bevorzugt, dass der HTSL als flexibles Band ausgebildet ist, welches vorzugsweise eine Trägerschicht aufweist, welche eine Vielzahl weiterer Schichten sowie ein hochtemperatursupraleitendes Material trägt, Die Trägerschicht ermöglicht den Zusammenhalt und somit die Handhabbarkeit des flexiblen Bandes.

Vorzugsweise sind mehrere als flexibles Band ausgebildete HTSL übereinander gestapelt angeordnet und/oder nebeneinander an einer gemeinsamen Oberfläche der Tragschiene und/oder an unterschiedlichen Oberflächen der Tragschiene angeordnet. Durch die Stapelung ergibt sich eine kompakte Bauform und höhere Stromdichte. Es wäre nicht möglich, einfach die Schichtdicke des supraleitenden Material im HTSL einfach zu erhöhen, da höhere Dicke nicht zu höherem Strom führt. Dies hat mit der Struktur der YBCO-Schicht zu tun. Generell liegt der Gedanke darin, eine gemeinsame mechanisch stabile Tragstruktur, d. h. Tragschiene zur Befestigung einer Vielzahl von HTSL zu nutzen.

Wenn die mehreren als flexibles Band ausgebildete HTSL im Bereich des Anfangs und/oder des Endes der Tragschiene leitend miteinander verbunden sind, liegen diese - zumindest über die Länge einer Tragschiene elektrisch parallel. Ungleichheiten zwischen einzelnen HTSL Schichten werden daher spätestens mit dem Anfang einer benachbarten Schiene ausgeglichen.

Wenn die mehreren als flexibles Band ausgebildete HTSL über ihre gesamte Länge leitend miteinander verbunden sind, insbesondere durch eine Lotverbindung, ergibt sich eine mechanisch stabile, industriell handhabbare Stromschiene mit einem Nennstrom, der um Größenordnungen gegenüber einem einzelnen HTSL-Leiter erhöht ist. Diese haben eine erhöhte mechanische Steifigkeit und halten den elektromagnetischen Abstoßungs- und Anziehungskräften stand. Daher ist es möglich, hochstromtragfähige kompakte Stromschienensysteme zu schaffen.

Wenn die Trägerschicht elektrisch leitfähig ist und mit dem darauf angeordneten hochtemperatursupraleitenden Material zumindest im Bereich des Anfangs und/oder Endes der Tragschiene elektrisch leitend verbunden ist und/oder je eine elektrisch leitfähige Zusatzschicht als unterste und oberste Schicht des HTSL vorgesehen ist, die mit dem dazwischen angeordneten hochtemperatursupraleitenden Material zumindest im Bereich des Anfangs und/oder Endes der Tragschiene elektrisch leitend verbunden ist und/oder eine elektrisch leitfähige sich über die Länge der Trägerschiene erstreckenden Zwischenschicht vorgesehen ist, die mit dem darauf angeordneten hochtemperatursupraleitenden Material zumindest im Bereich des Anfangs und/oder Endes der Tragschiene elektrisch leitend verbunden ist, ist gewährleistbar, dass auch bei Fehlfunktionen des Supraleiters eine gewisse Stromtragfähigkeit (Notlauffähigkeit) des System, sei es über die Tragschiene, die Trägerschicht oder Zwischenschicht, erreicht werden kann. In allen Fällen ist eine elektrisch leitende Kontaktierung im Bereich des Anfangs und Endes der Tragschiene bevorzugt, wobei auch eine Kontaktierung nur am Anfang oder Ende ausreichend wäre, da in der Praxis die benachbarte gleichartig Stromschiene ebenfalls für den nötigen elektrischen Kontakt sorgen würde.

Aus dem gleichen Grund kann alternativ oder zusätzlich die Tragschiene elektrisch leitend sein und ist zumindest im Bereich ihres Anfangs und/oder ihres Endes elektrisch leitend mit dem HTSL verbunden. , Die Tragschiene besteht beispielsweise insbesondere im Wesentlichen aus Kupfer, Stahl oder Aluminium.

Um die Notlaufeigenschaft zu gewährleisten die Tragschiene derart ausgestaltet und dimensioniert ist, dass
- sie die Stromlast, für die Stromschiene bei Betrieb unterhalb der Sprungtemperatur ausgelegt ist, zumindest kurzfristig, d. h. maximal 1 Minute, vorzugsweise max. 30 Sek, insbesondere max. 15 Sek., tragen kann ohne Schaden zu nehmen; und/oder
- sie bei bestimmungsgemäßen Einsatz die einzelnen HTSL gegen die vom Stromfluss verursachten Magnetischen Abstoßungskräfte zusammenhält; und/oder
- sie eine geplante Überstromlost, die die Stromlast, für die Stromschiene bei Betrieb unterhalb der Sprungtemperatur ausgelegt ist, übersteigt, zumindest kurzfristig, d. h. maximal 1 Minute, vorzugsweise max. 30 Sek, insbesondere max. 15 Sek., tragen kann ohne Schaden zu nehmen.

Sinngemäß gilt das gleiche für den Fall, dass der HTSL eine metallische Schicht, z. B. die Trägerschicht aus Metall, aufweist. Diese ist dann, gegebenenfalls alleine oder im Zusammenwirken mit der entsprechend ausgelegten elektrisch leitfähigen Tragschiene, derart elektrisch leitfähig, dass
- sie die Stromlast, für die Stromschiene bei Betrieb unterhalb der Sprungtemperatur ausgelegt ist, zumindest kurzfristig, d. h. maximal 1 Minute, vorzugsweise max. 30 Sek, insbesondere max. 15 Sek., tragen kann ohne Schaden zu nehmen; und/oder
- sie eine geplante Überstromlast, die die Stromlast, für die Stromschiene bei Betrieb unterhalb der Sprungtemperatur ausgelegt ist, übersteigt, zumindest kurzfristig, d. h. maximal 1 Minute, vorzugsweise max. 30 Sek, insbesondere max. 15 Sek., tragen kann ohne Schaden zu nehmen.

Entscheidend ist, dass elektrisch leitfähige Komponenten vorgesehen sind, welche beim überschreiten der Sprungtemperatur in der Lage sind für einen begrenzten Zeitraum die Stromlast zu tragen.

Zu Eignung für den erfindungsgemäß vorgesehenen Anwendungszweck sind die HTSL derart ausgelegt, dass die Stromschiene bei Einsatz unterhalb der Sprungtemperatur dauerhaft eine Stromlast, insbesondere Gleichstrom, von mehr als 5 kA, insbesondere mehr als 20 kA, tragen können.

Wenn die übereinander gestapelt angeordneten HTSL im Bereich des Anfangs und des Endes der Tragschiene eine Kontaktierungsfläche zum elektrischen Kontaktieren mit weiteren übereinander gestapelt angeordneten HTSL einer benachbarten Stromschiene aufweisen, ist ein Zusammenstecken, also ein lösbares Verbinden benachbarter erfindungsgemäßer Stromschienen möglich: Vorzugsweise verläuft die Kontaktierungsfläche stirnseitig senkrecht zur Längsachse der Tragschiene und ermöglicht somit eine Verbindung Stoß-auf-Stoß. Andere Geometrien der Stoßflächen ermöglichen dagegen eine größere Kontaktfläche und insgesamt einen geringeren Übergangswiderstand. Daher ist die Stoßfläche bevorzugt schräg oder seitlich zur Längsachse oder schichtweise treppenstufenartig. Es sind natürlich auch übliche Steckverbindungen, auch nach dem Nut-Federprinzip, möglich.

Vorzugsweise umfasst die Tragschiene über ihre Länge sich erstreckende Nuten, in welche die HTSL oder gestapelt angeordneten HTSL eingesetzt sind, um eine gute mechanische Positionierung und gute Weiterverarbeitbarkeit zu erreichen. Daher ist ferner bevorzugt, dass diese zu mindestens 50 %, vorzugsweise 75%, insbesondere 90 %, insbesondere vorzugsweise 100% ihrer Höhe in der Nut liegen, um den notwendigen mechanischen Schutz zu erlangen. Desweiteren wird durch die Höhe des Gesamtquerschnitts die o.g. Notlaufeigenschaft beeinflusst.

Die erfindungsgemäßen Stromschienen können vorzugsweise zu einem Stromschienensystem mit mindestens zwei in Reihe geschalteten elektrisch leitfähig über einen Konnektor verbundenen Stromschienen zusammengeschaltet werden. Es ergibt sich ein modulares System, welches flexibel aufbaubar, zum Beispiel nach Art eines Stecksystems, ist. Zu diesem Zweck ist bevorzugt, dass auch Abschnitte vorgesehen sind, in denen die beiden HTSL der Stromschienen über einen weiteren HTSL oder einen Konnektor verbunden sind, welcher als flexibles Band ausgebildet ist. Dies ermöglicht den notwendigen Ausgleich von Lageänderungen, zum Beispiel durch Wärmedehnung. Ferner sind dadurch Richtungsänderungen des Stromschienesystems möglich.

Da auch HTSL der Kühlung, zum Beispiel durch flüssigen Stickstoff bedürfen, benötigt jede einzelne Stromschiene beziehungsweise die zu einem Stromschienensystem verbundenen Stromschiene eine thermisch isolierende Hülle. Zweckmäßigerweise ist diese rohrartig, damit deren Oberflächen minimal ist. Wenn die Tragschiene mit dem damit verbundenen HTSL in der Hülle, insbesondere im Zentrum der Hülle, befestigt ist, ergibt sich ein modulares System mit isolierten Stromschienen unterschiedlicher Länge oder Radien. Diese können einfach zusammen gesetzt werden, wobei das Kühlmittel durch die Hüllen benachbarter Stromschiene fließen kann. Zweckmäßigerweise ist ferner die Hülle geeignet, eine Kühlflüssigkeit, insbesondere flüssigen Stickstoff, welche die Tragschiene umfließen kann zu führen bzw. weist die Hülle eine thermische Isolierung gegen die Umgebung auf. Der Fachmann wird also Hülle und Isolierung derart auswählen, dass ausreichende Stabilität, Dichtigkeit und Isolierung bei möglichst geringem Materialaufwand bzw. Abmessungen gegeben ist. Andere Flüssigkeiten kommen auch in Betracht, sofern ihr Siedepunkt unterhalb der Sprungtemperatur der verwendeten Supraleiter liegen.

Vorzugsweise sind in der Hülle Abstandshalter zum Befestigen der Tragschiene in der Hülle vorgesehen, mittels welchen in jeder einzelnen Hülle Tragschienen befestigt sein können, wodurch ein sicherer Sitz, auch unter Stromlast, gewährleistet ist.

In einer vorteilhaften Ausgestaltung ist vorgesehen, dass eine Tragschiene mehrere HTSL beziehungsweise HTSL-Stapel trägt. Es ergibt sich eine höhere Stromtragfähigkeit bei nur geringfügig vergrößertem Materialeinsatz. In diesem Sinn weist in einer besonderen Ausgestaltung die Tragschiene einen runden Querschnitt auf und es sind eine Vielzahl der HTSL oder gestapelten HTSL nebeneinander und in Längsrichtung der Tragschiene verlaufend auf der Innen- und/oder Außenseite der Hülle angeordnet. Ein Rohr ist wegen seiner Stabilität in allen Richtungen, dem optimalen Verhältnis von Umfang zu Querschnitt und der Möglichkeit gleichermaßen innen und außen Supraleiter anzubringen bevorzugt.

In einer Ausgestaltung kann jede Tragschiene einer Polarität entsprechen und in der Hülle eine Vielzahl von Tragschienen nebeneinander verlaufen. Die aufwändige Kühlung muss somit in Bezug auf eine einzige Hülle erfolgen. Eine besonders Platz sparende Anordnung ergibt sich, wenn die Tragschienen einen runden Querschnitt aufweisen und insbesondere koaxial ineinander verlaufen. In diesem Fall muss die innere Tragschiene nicht zwingend einen runden Querschnitt haben.

Vorzugsweise verlaufen in der Hülle zwei Tragschienen mit rundem Querschnitt koaxial ineinander, die über einen nicht elektrisch leitfähigen Isolator miteinander verbunden sind. Es ergibt sich somit eine besonders stabile, kompakte Struktur einer - vorzugsweise zweipoligen - Stromschiene, bei welcher der Isolator einen Beitrag zur mechanischen Stabilität leistet. Die Supraleiter mit der ersten Polarität sind dabei vorzugsweise auf der Außenseite der äußeren Tragschiene sowie die der zweiten Polarität auf der Innenseite der inneren Tragschiene angeordnet. Durch entsprechende Ausgleichsöffnungen beziehungsweise Einspeisung des Kühlmittel ist gewährleistet, dass dieses außen und innen strömt. Die Ausgleichsöffnungen können auch als Längsschlitze in den runden, vorzugsweise rohrartigen, Tragschienen verlaufen.

Die Tragschienenstruktur kann im Allgemeinen aus Metall, vorzugsweise Kupfer sein, wobei auch alle anderen Metalle prinzipiell verwendet werden könnten, insbesondere unter Abwägung der technischen Parameter und der Kosten. Das Paket der HTSL-Leiter wird in diesem Fall nicht nur leitend untereinander sondern auch leitend mit der Schienenträgerstruktur verbunden.

In speziellen Fällen, das heißt falls ein elektrisch-leitende Zwischenschicht, Zusatzschicht, Zusatzleiter, etc. oder insbesondere oder der HTSL mit einer ausreichend dicken Kupferschicht überzogen sein würde, kann die Schienentragstruktur auch aus einem beliebigen anderen, nicht elektrisch leitfähigen Material, insbesondere einen nicht Nicht-Metall, z. B. Kunststoff bestehen. Entscheidend ist, dass dieses die thermischen und mechanischen Belastungen aushält. In diesem Fall werden natürlich nur die einzelnen HTSL-Leiter miteinander leitend verbunden, z.B. verlötetet, und in der Tragschienenstruktur irgendwie eingebettet, z. B. verpresst, verklemmt, etc.

Erfindungsgemäß ist die oben und noch nachfolgend beschriebene Stromschiene insbesondere geeignet zur Verwendung als Gleichstromverbindung für Hochstromverbraucher, insbesondere Aluminium-, Kupfer- , Zink- oder auch Chlor-Elektrolysen, Graphitisierungsanlagen oder in großen Rechnzentren. Die dort auftretenden mittellangen Wege und extremen Anforderungen an Stromdichte, machen die Erfindung bereits zum jetzigen Zeitpunkt wirtschaftlich einsetzbar. Mit dem zu erwartenden Preisverfall geeigneter HTSL sind auch Fernverbindungen realisierbar. Erfindungsgemäß fallen auch zukünftige supraleitende Materialien, die eine höhere Sprungtemperatur als die derzeit bekannten HTSL haben, ausdrücklich unter einen HTSL im Sinn der Erfindung.

Weitere Vorteile ergeben sich aus der folgenden Beschreibung und den beigefügten Figuren. Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter.
Fig. 1 zeigt im Querschnitt eine einfache Ausgestaltung der Erfindung mit einer U-förmigen Tragschiene 2 mit einem Stapel 3 von übereinander geschichteten flexiblen HTSL 31, welche sich im wesentlichen über die Länge der Tragschiene erstrecken.
Fig. 2 zeigt den typischen Aufbau eines verbreiteten HTSL 31. Ein Hastelloyband ist das Trägermaterial für den Supraleiter und hat eine Standarddicke von 0,05 mm. Der Supraleiter selbst (YBCO) ist nur ca. 1 µm dick. Die anderen Schichten sind technologisch notwendig zur Erzeugung der Textur im Supraleiter, die die YBCO-Schicht erst supraleitend macht. Sandwichartig umgeben zwei ca. 10 µm dicke Schichten Kupfer das Band. Das Band ist daher insgesamt ähnlich wie ein Kabel flexibel. Zum Schutz des Inneren können die umgebenden Schichten Kupfer an den beiden äußeren Kanten über eine ebenso breite Kupferschicht verbunden sein, so dass die inneren Schichten in Kupfer eingeschlossen sind.
Fig. 3 zeigt im Querschnitt eine Stromschiene 1 mit kühlmitteldichter isolierender Hülle 4 und darin gelagerte Tragschiene 2, welche vorliegend als Rohr ausgebildet ist. Im Außenumfang des Rohres 2 befinden sich nebeneinander rund in Längsrichtung desselben verlaufende Nuten 21, in welchem die HTSL Stapel 3 befestigt sind. Durch nicht gezeigte Abstandshalter wird die Tragschiene 2 relativ zur Hülle 4 gehalten. Im Inneren der Hülle 4 zirkuliert ein Kühlmittel 5, zum Beispiel flüssiger Stickstoff, welcher dafür sorgt, dass die Temperatur der HTSL unterhalb der Sprungtemperatur bleibt. Da die Stapel 3 auch thermisch mit den Rohr 2 verbunden sind und das Rohr auch ihnen vom Kühlmittel 5 durchströmt wird, ist dies besonders gut gewährleistet. Dieses Ausführungsbeispiel wird normalerweise für einpolige Stromschienen verwendet, das heißt alle HTSL Stapel 3 haben dieselbe Polarität. Bei geringen Spannungen und bei Verwendung eines elektrisch isolierenden Rohres können grundsätzlich, d. h. auch unabhängig von diesem Ausführungsbeispiel, voneinander beabstandete HTSL bzw. HTSL Stapel unterschiedlicher Polarität besitzen, da flüssiger Stickstoff im Fall einer Störung, ausreichend Durchschlagsicherheit bietet, was natürlich von der Spannung und den Abständen zueinander abhängt. Gegebenenfalls können die Abstände auch derart erweitert sein, dass im Notfall auch Durchschlagsicherheit bei gasförmigem Stickstoff oder Luft gegeben ist.
Fig. 4 entspricht im wesentlichen dem Ausführung Beispiel aus Fig. 3 Die äußere Tragschiene 2a mit den darin befestigten HTSL Schichten 3a entspricht vom Aufbau her der Tragschiene 2 aus Fig. 3. Allerdings ist im Inneren der äußeren Tragschiene 2a koaxial zu dieser eine innere Tragschiene 2b mit nach innen weisenden Nuten und darin gelagerten HTSL Stapeln 3b vorgesehen. Wenn, wie in diesem Ausführungsbeispiel, die bei den Tragschienen 2a, 2b mechanisch miteinander verbunden sind, ist eine isolierenden Zwischenschicht 6 vorzusehen. Diese kann dabei auch mechanische Aufgaben erfüllen. Wie oben angesprochen, können die Tragschienen auch aus Kunststoff oder einem anderen Nichtleiter sein. In diesem Fall ergäbe sich ein einfacherer Aufbau, da ein gemeinsames Bauteil sowohl die Inneren als auch äußeren HTSL Stapel 3a, 3b tragen können.

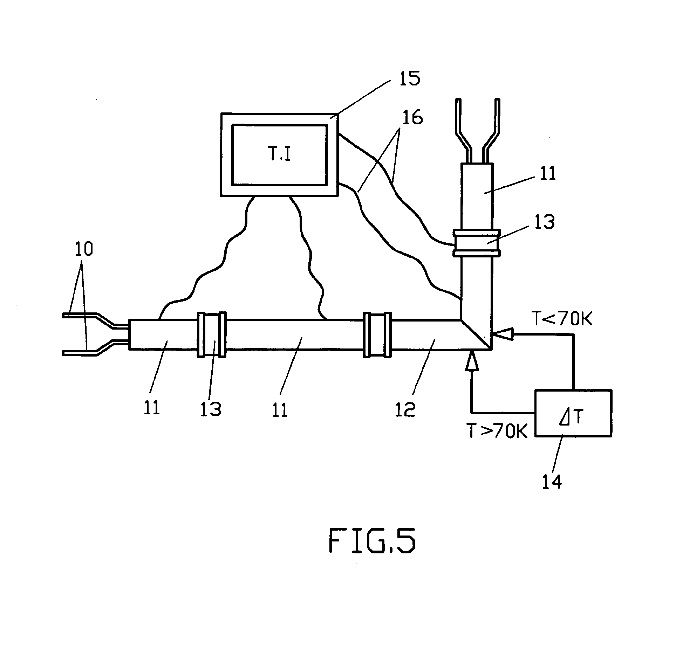

Fig. 5 zeigt schließlich den möglichen prinzipiellen Aufbau einer erfindungsgemäßen HTSL-Gleichstrom-Hochstromverbindung: über eine konventionelle Stromzuführung 10 erfolgt der Übergang vom Normalen zum supraleitenden Bereich. Gerade Elemente 1 1 unterschiedlicher Länge sowie Winkelstücke 1 2 zum Richtungswechsel mit geringstem Raumbedarf liegen als vorgefertigte Funktionseinheiten, also als Stromschienenstück vor. Diese beinhalten die Hülle, die Tragschiene sowie die zum Verbinden der vorgenannten notwendigen Haltestrukturen. Kupplungsstücke 13 dienen als Verbindungsstück zwischen zwei Elementen 11 bzw. 12. Durch entsprechende Geometrie der Enden der Elemente 11,12 sowie der Kupplungsstücke 1 3 kann gewährleistet werden, dass die Kupplungsstücke 13 die Elemente 11,12 gleichermaßen dicht gegenüber dem Kältemittel und elektrisch leitend miteinander verbinden. Kälteanlagen 14 dienen dem Ausgleich der Wärmeverluste am Kältemittel. Diese treten insbesondere auf durch die Oberfläche der Höhe der Elemente 11,12 sowie im Bereich der Stromzuführung 10 durch die Wärmeleitung in derselben. Schließlich ist nicht näher erläuterte Messtechnik 15 zur Überwachung der Betriebsdaten und Weiterleitung über Telemetrieeinrichtungen vorgesehen, welche auch zweckmäßigerweise an verschiedenen Punkten der Hochstromverbindung Messwerte abgreift, was hier nur schematisch über Messverbindungen 16 angedeutet ist.

## Patentansprüche

1. Stromschiene (1) mit einer um ihre Längsachse biegesteifen Tragschiene (2) und einem Hochtemperatursupraleiter (HTSL) (31), wobei sich der HTSL im Wesentlichen über die Länge der Tragschiene (2) erstreckt.

2. Stromschiene nach Anspruch 1 , **dadurch gekennzeichnet, dass** der HTSL (31) als flexibles Band ausgebildet ist, welches vorzugsweise eine Trägerschicht aufweist, welche eine Vielzahl weiterer Schichten sowie ein hochtemperatursupraleitendes Material tragt.

3. Stromschiene nach Anspruch 1 oder 2, **dadurch gekennzeichnet, dass** mehrere als flexibles Band (31) ausgebildete HTSL übereinander gestapelt (3) angeordnet und/oder nebeneinander an einer gemeinsamen Oberfläche der Tragschiene und/oder an unterschiedlichen Oberflächen der Tragschiene angeordnet sind.

4. Stromschiene nach einem der vorherigen Ansprüche, **dadurch gekennzeichnet, dass** die mehreren als flexibles Band ausgebildete HTSL im Bereich des Anfangs und/oder des Endes der Tragschiene leitend miteinander verbunden sind.

5. Stromschiene nach einem der vorherigen Ansprüche, **dadurch gekennzeichnet, dass** die mehreren als flexibles Band ausgebildete HTSL über ihre gesamte Länge leitend miteinander verbunden sind, insbesondere durch eine Lotverbindung.

6. Stromschiene nach einem der vorherigen Ansprüche, **dadurch gekennzeichnet, dass** die Trägerschicht elektrisch leitfähig ist und mit dem darauf angeordneten hochtemperatursupraleitenden Material zumindest im Bereich des Anfangs und/oder Endes der Tragschiene elektrisch leitend verbunden ist und/oder
eine elektrisch leitfähige Zusatzschicht als unterste und/oder oberste Schicht des HTSL vorgesehen ist, die mit dem dazwischen angeordneten hochtemperatursupraleitenden Material zumindest im Bereich des Anfangs und/oder Endes der Tragschiene elektrisch leitend verbunden ist und/oder
eine elektrisch leitfähige sich über die Länge der Trägerschiene erstreckenden Zwischenschicht vorgesehen ist, die mit dem darauf angeordneten hochtemperatursupraleitenden Material zumindest im Bereich des Anfangs und/oder Endes der Tragschiene elektrisch leitend verbunden ist

7. Stromschiene nach einem der vorherigen Ansprüche, **dadurch gekennzeichnet, dass** die Tragschiene elektrisch leitend ist, insbesondere im Wesentlichen aus Kupfer oder Aluminium besteht, und zumindest im Bereich ihres Anfangs und/oder ihres Endes elektrisch leitend mit dem HTSL verbunden ist.

8. Stromschiene nach einem der vorherigen Ansprüche, **dadurch gekennzeichnet, dass** die Tragschiene derart ausgestaltet und dimensioniert ist, dass
- sie die Stromlast, für die Stromschiene bei Betrieb unterhalb der Sprungtemperatur ausgelegt ist, zumindest kurzfristig, d. h. maximal 1 Minute, vorzugsweise max. 30 Sek, insbesondere max. 15 Sek., tragen kann ohne Schaden zu nehmen; und/oder
- sie bei bestimmungsgemäßen Einsatz die einzelnen HTSL gegen die vom Stromfluss verursachten Magnetischen Abstoßungskräfte zusammenhält; und/oder
- sie eine geplante Überstromlost, die die Stromlast, für die Stromschiene bei Betrieb unterhalb der Sprungtemperatur ausgelegt ist, übersteigt, zumindest kurzfristig, d. h. maximal 1 Minute, vorzugsweise max, 30 Sek, insbesondere max, 15 Sek" tragen kann ohne Schaden zu nehmen.

9. Stromschiene nach einem der vorherigen Ansprüche, **dadurch gekennzeichnet, dass** der HTSL eine metallische Schicht, z, B, eine Trägerschicht, Zusatzschicht oder Zwischenschicht aus Metall, aufweist, welche, gegebenenfalls alleine oder im Zusammenwirken mit der entsprechend ausgelegten elektrisch leitfähigen Tragschiene, derart elektrisch leitfähig ist, dass
- sie die Stromlast, für die Stromschiene bei Betrieb unterhalb der Sprungtemperatur ausgelegt ist, zumindest kurzfristig, d, h, maximal 1 Minute, vorzugsweise max, 30 Sek, insbesondere max, 15 Sek., tragen kann ohne Schaden zu nehmen; und/oder
- sie eine geplante Überstromlast, die die Stromlast, für die Stromschiene bei Betrieb unterhalb der Sprungtemperatur ausgelegt ist, übersteigt, zumindest kurzfristig, d, h, maximal 1 Minute, vorzugsweise max, 30 Sek, insbesondere max, 15 Sek., tragen kann ohne Schaden zu nehmen.

10. Stromschiene nach einem der vorherigen Ansprüche, **dadurch gekennzeichnet, dass** diese derart ausgelegt sind, dass die Stromschiene bei Einsatz unterhalb der Sprungtemperatur dauerhaft eine Stromlast, insbesondere Gleichstrom, von mehr als 5 kA, insbesondere mehr als 20 kA, tragen können.

11. Stromschiene nach einem der vorherigen Ansprüche, **dadurch gekennzeichnet, dass** die übereinander gestapelt angeordneten HTSL im Bereich des Anfangs und des Endes der Tragschiene eine Kontaktierungsfläche zum elektrischen Kontaktieren mit weiteren übereinander gestapelt angeordneten HTSL einer benachbarten Stromschiene aufweisen, wobei vorzugsweise die Kontaktierungsfläche stirnseitig senkrecht zur Längsachse der Tragschiene oder schräg oder seitlich dazu oder schichtweise treppenstufenartig ausgebildet ist.

12. Stromschiene nach einem der vorherigen Ansprüche, **dadurch gekennzeichnet, dass** die Tragschiene (2, 2a,2b) über ihre Länge sich erstreckende Nuten (21) umfasst, in welche die HTSL (31) oder gestapelt angeordneten HTSL (3) eingesetzt sind, insbesondere derart, dass sie zu mindestens 50 %, vorzugsweise 75%, insbesondere 90 %, insbesondere vorzugsweise 100% ihrer Höhe in der Nut liegen.

13. Stromschienensystem mit zwei in Reihe geschalteten elektrisch leitfähig über einen Konnektor verbundenen Stromschienen nach einem der vorherigen Ansprüche,
wobei vorzugsweise die beiden HTSL der Stromschienen über einen weiteren HTSL oder einen als Konnektor verbunden sind, welcher als flexibles Band ausgebildet ist;
und/oder
die Stromschiene eine isolierende Hülle (4), insbesondere rohrartig, aufweist, wobei
die Tragschiene mit dem damit verbundenen HTSL in der Hülle, insbesondere im Zentrum der Hülle, befestigt ist,
die Hülle geeignet ist eine Kühlflüssigkeit, insbesondere flüssigen Stickstoff, welche die Tragschiene umfließen kann zu führen und/oder die Hülle eine thermische Isolierung gegen die Umgebung aufweist.

14. Stromschienensystem nach einem der vorherigen Ansprüche, **dadurch gekennzeichnet, dass** in der Hülle (4) Abstandshalter zum Befestigen der Tragschiene (2) in der Hülle vorgesehen sind;
und/oder
die Tragschiene (2) insbesondere einen runden Querschnitt hat, vorzugsweise als Rohr ausgebildet ist, und eine Vielzahl der HTSL (31) oder gestapelten HTSL (3) nebeneinander und in Längsrichtung der Tragschiene verlaufend auf der Innen- und/oder Außenseite der Hülle angeordnet sind;
und/oder
in der Hülle eine Vielzahl von Tragschienen (2a, 2b) nebeneinander verlaufen, wobei vorzugsweise die Tragschienen einen rundem Querschnitt aufweisen und insbesondere koaxial ineinander verlaufen
und/oder
in der Hülle zwei Tragschienen (2a, 2b) mit rundem Querschnitt koaxial ineinander verlaufen, die über einen nicht elektrisch leitfähigen Isolator (6) miteinander verbunden sind.

15. Verwendung der Stromschiene nach einem der vorherigen Ansprüche als Gleichstromverbindung für Hochstromverbraucher, insbesondere Aluminium-, Kupfer- oder Zink-Elektrolysen, Graphitisierungsanlagen, chemische Elektrolysen oder Rechenzentren zur Versorgung von Servern mit Gleichstrom
